(19) Europäisches Patentamt
European Patent Office
Office européen des brevets

(11) **EP 2 404 159 B1**

(12) **FASCICULE DE BREVET EUROPEEN**

(45) Date de publication et mention de la délivrance du brevet:
**13.06.2018 Bulletin 2018/24**

(21) Numéro de dépôt: **10707001.3**

(22) Date de dépôt: **03.03.2010**

(51) Int Cl.:
*G01N 21/17* (2006.01)  *G01N 21/45* (2006.01)

(86) Numéro de dépôt international:
**PCT/EP2010/052647**

(87) Numéro de publication internationale:
**WO 2010/100168 (10.09.2010 Gazette 2010/36)**

(54) **PROCÉDÉ DE MESURE DE LA DISTANCE FOCALE D'UNE LENTILLE THERMIQUE**

VERFAHREN ZUM MESSEN DER BRENNWEITE EINER THERMISCHEN LINSE

METHOD FOR MEASURING THE FOCAL DISTANCE OF A THERMAL LENS

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **06.03.2009 FR 0951426**

(43) Date de publication de la demande:
**11.01.2012 Bulletin 2012/02**

(73) Titulaire: **Commissariat à l'Énergie Atomique et aux Énergies Alternatives 75015 Paris (FR)**

(72) Inventeurs:
• **COUSTON, Laurent**
  **F-30400 Villeneuve lès Avignon (FR)**
• **CANTO, Fabrice**
  **F-34160 Boisseron (FR)**

(74) Mandataire: **Ilgart, Jean-Christophe et al BREVALEX 95, rue d'Amsterdam 75378 Paris Cedex 8 (FR)**

(56) Documents cités:
**JP-A- 10 009 811    US-A- 5 561 547**

• **WEIMER WAYNE A ET AL: "MULTICHANNEL CROSSED-BEAM THERMAL LENS MEASUREMENS FOR ABSOLUTE ABSORBANCE DETERMINATION WITH PULSED LASER EXCITATION." ANALYTICAL CHEMISTRY 1988 APR 1, vol. 60, no. 7, 1 avril 1988 (1988-04-01), pages 662-665, XP002545392**
• **BURGI D S ET AL: "Crossed-beam thermal lens microscope" AIP CONFERENCE PROCEEDINGS USA, no. 146, 1986, pages 664-667, XP002545393 ISSN: 0094-243X**
• **BENKO Z ET AL: "Measurement of thermal gradient in solutions generated by laser illumination" PROCEEDINGS OF THE SPIE - THE INTERNATIONAL SOCIETY FOR OPTICAL ENGINEERING SPIE-INT. SOC. OPT. ENG USA, vol. 3407, 1998, pages 285-290, XP002583211 ISSN: 0277-786X**

**Description**

## DOMAINE TECHNIQUE

La présente invention concerne un procédé de mesure de la distance focale d'une lentille thermique créée dans un analyte et un procédé d'analyse physico-chimique de l'analyte.

## ÉTAT DE LA TECHNIQUE ANTÉRIEURE

Les dispositifs de mesure de la distance focale d'une lentille thermique formée dans un analyte sont déjà connus. Un tel dispositif permet notamment l'analyse physico-chimique de l'analyte. On va commencer par rappeler le principe de formation d'une lentille thermique.

Lorsqu'un faisceau optique est absorbé par une molécule, cela se traduit par l'augmentation de son énergie interne. La molécule passe dans un état énergétique instable, ce qui la conduit à évacuer le surcroît d'énergie pour retrouver son état stable antérieur. Plusieurs voies sont alors possibles. Elle peut émettre un rayonnement optique, c'est la luminescence, elle peut émettre un rayonnement thermique, c'est le phénomène de vibration-rotation, il peut y avoir aussi un phénomène de transfert d'énergie à d'autres systèmes chimiques environnants.

La perte d'énergie par voie thermique est la plus fréquente mais il peut y avoir également une relaxation par voie de luminescence ou par transfert d'énergie à d'autres systèmes chimiques.

Si l'énergie absorbée par l'analyte est importante, l'élévation brutale de la température par relaxation moléculaire se traduit par une dilatation du milieu et donc par une diminution locale de l'indice de réfraction. On a formé une unique lentille virtuelle appelée lentille thermique. L'appellation de la lentille thermique provient de la forme du faisceau optique d'excitation, généralement un faisceau laser, et de la distribution d'énergie de son front d'onde. Cette lentille thermique a une géométrie et des propriétés similaires à celles d'une lentille physique. On n'obtient pas la même lentille thermique selon que l'on utilise un dispositif de visée qui sert à détecter l'effet thermique et est de type faisceau optique, dans la direction de propagation du faisceau optique d'excitation ou dans une direction sensiblement perpendiculaire à la direction de propagation.

Dans le premier cas, la lentille thermique apparait comme un système optique sphérique divergeant par les effets conjugués du gradient d'énergie du front d'onde du faisceau optique d'excitation et par l'ouverture angulaire du dispositif de visée au point focal de la lentille thermique. La lentille thermique est, pour une concentration en analyte donnée, d'autant plus divergente que l'ouverture angulaire du dispositif de visée est grande.

Dans le second cas, la lentille thermique apparait comme un système optique sensiblement cylindrique divergent induit par les effets conjugués du gradient d'énergie déposé par le front d'onde du faisceau optique d'excitation et du diamètre du faisceau optique d'excitation au point de visée du dispositif de visée. La lentille thermique est, pour une concentration en analyte donnée, d'autant plus divergente que le diamètre du faisceau optique d'excitation au point de visée est grand.

On s'aperçoit que la distance focale de la lentille thermique observée avec un dispositif de visée sensiblement perpendiculaire à la direction de propagation du faisceau optique d'excitation est largement plus faible que celle d'une lentille thermique observée avec un dispositif de visée sensiblement colinéaire à la direction de propagation du faisceau optique d'excitation, toutes choses étant égales par ailleurs.

Il a été montré que la distance focale de la lentille thermique dépend de l'absorbance de l'espèce moléculaire à analyser et que cette absorbance dépend de la concentration de l'espèce moléculaire absorbante comme on le verra plus loin.

D'un point de vue analytique, la formulation mathématique de la distance focale de la lentille thermique dépend aussi de la manière de créer la lentille thermique. Le faisceau optique d'excitation peut être focalisé ou non et son émission peut être en impulsions ou continue. De plus, comme on l'a déjà indiqué le dispositif de visée qui sonde la lentille thermique peut être sensiblement colinéaire à la direction de propagation du faisceau optique d'excitation ou sensiblement perpendiculaire à cette dernière.

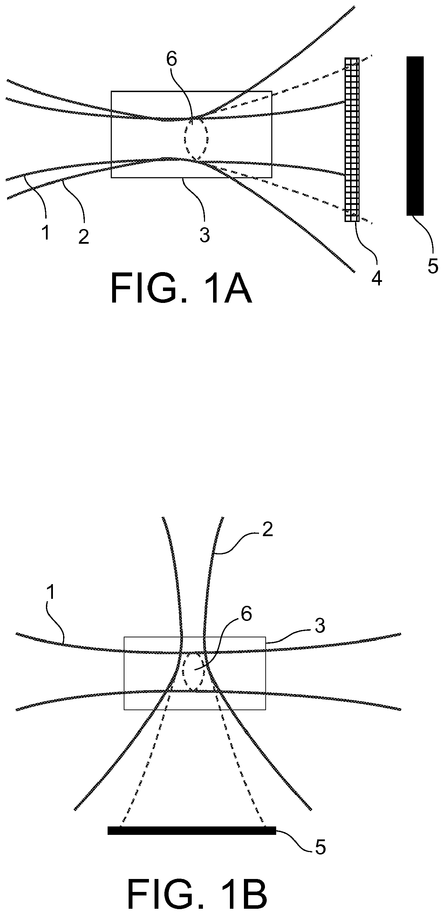

La figure 1A montre une lentille thermique au niveau de laquelle le faisceau optique d'excitation et le faisceau optique de sonde sont sensiblement colinéaires et la figure 1B montre une lentille thermique au niveau de laquelle le faisceau optique d'excitation et le faisceau optique de sonde sont sensiblement perpendiculaires. La référence 1 correspond au faisceau optique d'excitation, la référence 2 illustre le faisceau optique de sonde, la référence 3 illustre l'analyte, la référence 4 est un filtre et la référence 5 est un détecteur. La lentille thermique créée est représentée en pointillés et est référencée 6.

La distance focale f' de la lentille thermique de la figure 1A est donnée par les expressions (1) et (2) suivantes :

$$\frac{1}{f'} = \frac{2,3.\varepsilon.l.C.P}{\pi.k.\omega_{OE}^2}.\frac{dn}{dT}.\frac{1}{1+\dfrac{t_c}{2.t}} \qquad (1)$$

$$\frac{1}{f'} = 8.\frac{2,3.\varepsilon.l.C.E}{\pi.\rho.C_p\omega_{OE}^4}.\frac{dn}{dT}.\frac{1}{\left(1+\dfrac{t}{2.t_c}\right)^2} \qquad (2)$$

avec :

- $t_c$ durée de vie de la lentille thermique telle que :

$$t_c = \frac{\omega_{OE}^2.\rho.C_p}{4.k}$$

- k conductivité thermique de l'analyte en $W.cm^{-1}.K^{-1}$,
- $\rho$ masse volumique de l'analyte en $g.cm^{-3}$,
- $C_p$ capacité calorifique de l'analyte en $J.g^{-1}.K^{-1}$,
- $\omega_{OE}$ rayon du faisceau optique d'excitation au niveau de l'analyte en cm,
- $\varepsilon$ coefficient d'absorption molaire de l'analyte (autrement appelé coefficient d'extinction molaire), il représente la faculté d'un élément à absorber la lumière, il est exprimé en $dm^3.cm^{-1}.mol^{-1}$,
- C concentration de l'analyte en $mol.dm^{-3}$,
- l longueur du trajet optique dans l'analyte en cm,
- E énergie du laser d'excitation en impulsions en J,
- P puissance du laser d'excitation continu en W,
- $\dfrac{dn}{dT}$ gradient d'indice de réfraction de l'analyte en $K^{-1}$.

L'expression (1) correspond au cas où le faisceau optique d'excitation 1 est continu et l'expression (2) correspond au cas où le faisceau optique d'excitation 1 est en impulsions.

Sur la figure 1B, le faisceau optique de sonde 2 est focalisé à proximité de la lentille thermique 6. Une telle configuration permet d'employer des analytes de très petits volumes de l'ordre de quelques picolitres, s'il s'agit d'analytes liquides ou gazeux ou de quelques $10^{-12}$ décimètres au cube. Il faut noter toutefois que la mise en oeuvre expérimentale est assez délicate.

La distance focale f' de la lentille thermique de la figure 1B est donnée par les expressions (3) et (4) suivantes :

$$\frac{1}{f'} = \frac{2,3.\varepsilon.C.P}{\sqrt{2.\pi}.k.\omega_{OE}}.\frac{dn}{dT}.\left[1-\frac{1}{\left(1+\dfrac{2t}{t_c}\right)^{1/2}}\right] \qquad (3)$$

$$\frac{1}{f'} = \frac{2^{5/2}}{\sqrt{\pi}}.\frac{2,3.\varepsilon.C.E}{\rho.C_p.\omega_{OE}^3}.\frac{dn}{dT}.\frac{1}{\left(1+\dfrac{2.t}{t_c}\right)^{3/2}} \qquad (4)$$

L'expression (3) correspond au cas où le faisceau optique d'excitation 1 est continu et l'expression (4) correspond au cas où le faisceau optique d'excitation 1 est en impulsions.

Si le faisceau optique d'excitation 1 est continu, il est préférable d'utiliser un obturateur mécanique entre la source optique générant le faisceau optique d'excitation (non représentée) et l'analyte pour permettre une relaxation thermique de l'analyte. Un faisceau optique d'excitation 1 continu, couplé à un obturateur mécanique, offre de nombreux modes d'excitation permettant de faire varier la durée d'excitation de l'analyte et le rapport cyclique entre l'excitation de l'analyte et l'absence d'excitation. On notera qu'il faut exciter l'analyte un certain temps pour atteindre un état stationnaire.

Plusieurs méthodes sont connues pour mesurer la distance focale d'une lentille thermique et en déduire par exemple la concentration d'une espèce moléculaire dans un analyte.

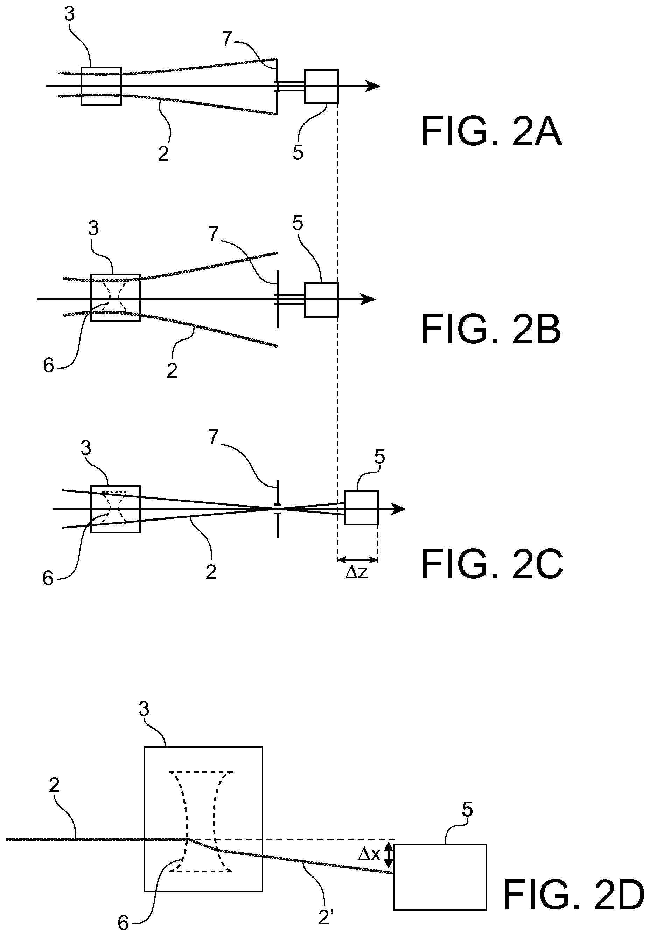

Sur les figures 2A, 2B, 2C on a représenté un dispositif de mesure de la distance focale d'une lentille thermique 3 connu. Un tel dispositif est décrit par exemple dans les documents [1], [2] référencés à la fin de la présente description. Le faisceau optique de sonde 2 traverse un diaphragme 7 avant d'être intercepté par le détecteur 5 qui est de type photodiode. Le faisceau optique d'excitation n'est pas représenté. Le diaphragme 7 se trouve entre l'analyte 3 et le détecteur 5. Le détecteur peut être associé ou non à un système optique dioptrique (non représenté). On mesure le rapport des intensités acquises par le détecteur 5 dans deux configurations : dans la première configuration, illustrée sur la figure 2A, la lentille thermique n'est pas crée, c'est-à-dire que le faisceau optique d'excitation n'illumine pas l'analyte. Dans la seconde configuration, la lentille thermique 6 est présente.

La figure 2C est à prendre en combinaison avec la figure 2A. On mesure l'intensité acquise par le détecteur 5 dans la configuration illustrée à la figure 2A. Dans une seconde configuration, la lentille thermique 6 est présente et on déplace le détecteur 5 ou l'ensemble détecteur-système optique dioptrique s'il y en existe un, dans la direction de propagation du faisceau optique de sonde jusqu'à ce que l'intensité acquise par le détecteur 5 soit égale à celle mesurée dans la première configuration. La connaissance de la distance Δz, correspondant au déplacement du détecteur, 5 permet de remonter à la distance focale de la lentille thermique 6.

Sur la figure 2D, on a illustré un autre dispositif pour mesurer la distance focale de la lentille thermique 6 connu. Un tel dispositif est décrit par exemple dans les documents [3], [4], [5] référencés à la fin de la présente description. On mesure l'intensité acquise par le détecteur 5 dans la configuration illustrée à la figure 2A. Une fois que la lentille thermique 6 est créée, le faisceau optique de sonde 2' est défléchi par rapport à la direction de propagation qu'a le faisceau optique de sonde en amont de l'analyte 3. En mesurant la déviation Δx qui permet d'obtenir la même intensité, on peut remonter à la distance focale.

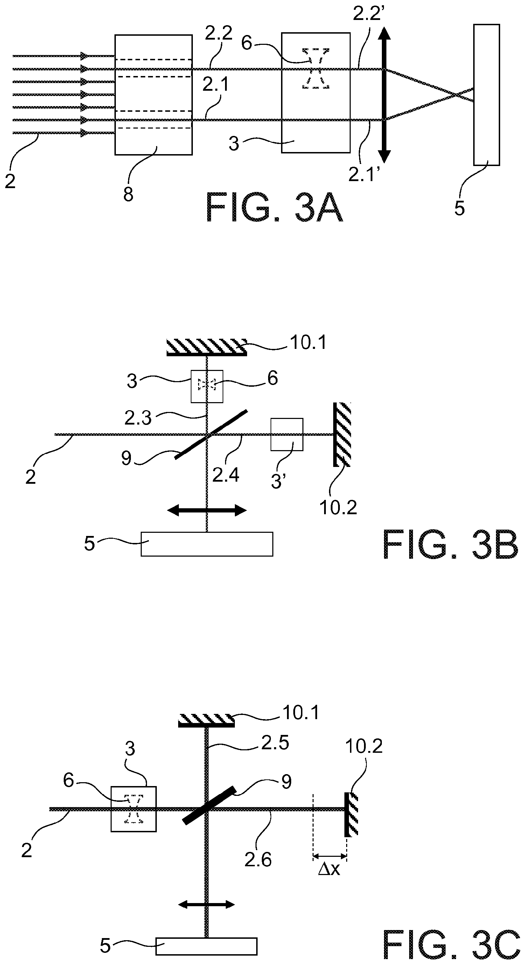

Il existe également des méthodes pour calculer la distance focale d'une lentille thermique qui utilisent les interférences. Sur la figure 3A, on a représenté un interféromètre de Fizeau. Un tel dispositif est décrit par exemple dans le document [6] référencé à la fin de la présente description. On utilise deux faisceaux optiques de sonde 2.1, 2.2 issus d'une même source optique. Le faisceau optique de sonde 2 est divisé en deux en passant à travers un diviseur de faisceau 8 placé en amont de l'analyte 3. L'un des faisceaux optiques de sonde 2.1 passe à travers l'analyte 3 dans une zone exempte de lentille thermique et l'autre faisceau optique de sonde 2.2 passe à travers l'analyte au niveau d'une zone contenant la lentille thermique 6. Les deux faisceaux optiques qui sortent de l'analyte 3 sont référencés 2.1' et 2.2'. La lentille thermique 6 induit un déphasage entre les deux faisceaux optiques 2.1' et 2.2' qui sortent de l'analyte 3 et des interférences apparaissent. Le détecteur 5 intercepte les deux faisceaux optiques et fait apparaître une figure d'interférences. Cette figure d'interférences permet de remonter au front d'onde de la source et à la distance focale de la lentille thermique.

Sur la figure 3B, on a représenté un interféromètre de Michelson. On utilise deux analytes 3, 3' identiques. Dans l'un, référencé 3, on forme une lentille thermique 6 et l'autre référencé 3' est exempt de lentille thermique. Le faisceau optique de sonde 2 arrive sur une lame séparatrice 9. La lame séparatrice 9 dévie une première partie du faisceau optique de sonde 2.3 vers le premier analyte 3, cette première partie du faisceau optique sonde 2.3 traverse le premier analyte 3 une première fois, elle se réfléchit sur un miroir 10.1 et traverse le premier analyte 3 une seconde fois, elle traverse la lame séparatrice 9 et atteint un détecteur 5. La lame séparatrice 9 laisse passer une seconde partie du faisceau optique de sonde 2.4 vers le second analyte 3'. La seconde partie du faisceau optique sonde 2.4 traverse le second analyte 3', est réfléchie par un second miroir 10.2, repasse à travers le second analyte 3' et est réfléchi par la lame séparatrice vers le détecteur 5. Il existe une différence de marche entre les deux parties du faisceau optique de sonde 2.3, 2.4 à cause de la présence de la lentille thermique 6 dans le premier analyte 3.

Sur la figure 3C, on a représenté un autre dispositif interférométrique avec une lame séparatrice 9, et deux miroirs 10.1, 10.2 permettant de perturber la figure interférentielle du d'onde par la lentille thermique et d'en déduire ses caractéristiques physiques. Un tel dispositif est décrit par exemple dans les documents [7], [8] référencés à la fin de la présente description. Dans ce cas, il n'y a qu'un seul analyte 3 dans lequel on forme la lentille thermique 6. Le faisceau optique de sonde 2 traverse la lentille thermique 6 avant d'être séparé en deux parties 2.5, 2.6 qui auront des chemins optiques de longueurs différentes, car l'un des miroirs 10.2 est plus éloigné de la lame séparatrice 9 que l'autre. Le chemin optique du faisceau optique 2.6 est plus long que celui de faisceau optique 2.5. La lentille thermique 6 déforme le front d'onde du faisceau optique de sonde 2 avant sa séparation. Les interférences obtenues sur le détecteur 5 traduiront l'allure de la lentille thermique, sa distance focale.

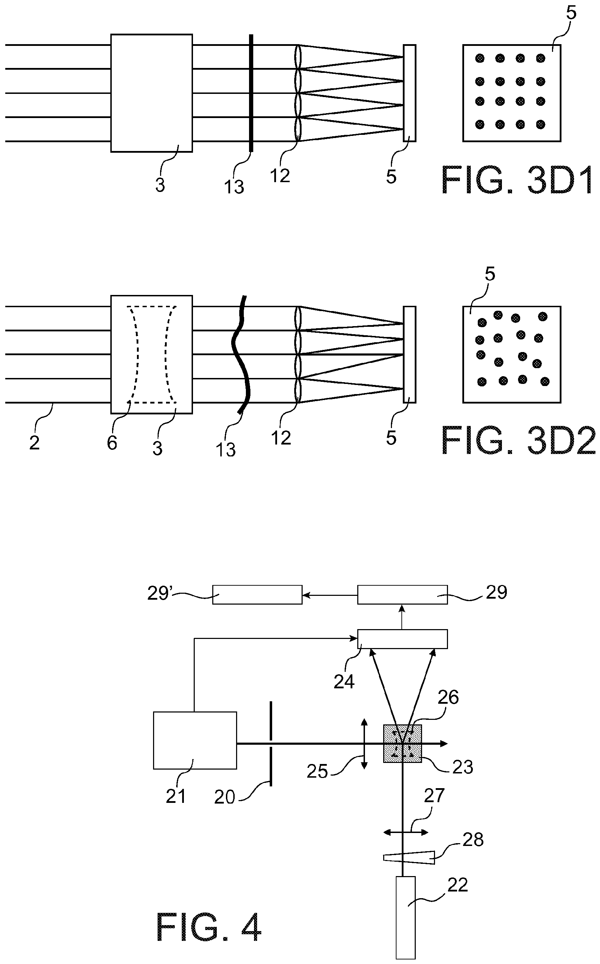

Sur les figures 3D1, 3D2 on a représenté un analyseur de Shack-Hartmann. Un tel dispositif est décrit par exemple dans les documents [9], [10] référencés à la fin de la présente description. Cet appareil comporte une matrice de microlentilles 12 placée devant un détecteur 5. Le faisceau optique de sonde 2 traverse d'abord l'analyte à analyser 3, puis la matrice de microlentilles 12 avant d'être intercepté par le détecteur 5. On mesure la différence géographique d'éclairage interceptée par le détecteur 5 dans deux configurations : dans la première configuration, illustrée sur la figure 3D1 la lentille thermique n'est pas crée, c'est-à-dire que le faisceau optique d'excitation (non représenté) n'illumine pas l'analyte 3. Dans la seconde configuration illustrée sur la figure 3D2, la lentille thermique 6 est présente dans l'analyte 3. Ainsi, en fonction de l'allure du front d'onde du faisceau optique qui émerge de l'analyte 3 et traverse la matrice de microlentilles 12, des déviations différentes vont avoir lieu. Les fronts d'ondes sont référencés 13.

L'éclairage intercepté par le détecteur 5 dans les deux configurations correspond à une déformation du front d'onde primaire par une convolution simple, sans interférence. Il est possible de déduire des éclairages obtenus la géométrie de la lentille.

Dans les dispositifs décrits précédemment, seuls ceux qui réalisent des mesures d'intensité sont employés à des fins de mesure de concentration. Les mesures de concentration posent le problème de la stabilité de l'intensité d'éclairement de la source et de son éventuelle absorption par le milieu d'étude.

Les mesures réalisées ne peuvent être fiables à cause de l'instabilité à l'origine des fluctuations de l'intensité des sources laser, de l'instabilité de la transmission du faisceau optique de sonde lorsque l'analyte absorbe le faisceau optique de sonde, et de l'instabilité mécanique inhérente aux ajustements optiques extrêmement précis des sources optiques pour que l'intersection entre le faisceau optique d'excitation et le faisceau optique de sonde se fasse au niveau de leurs axes optiques. La maîtrise cette intersection à l'échelle micrométrique est difficile car elle dépend de variations thermiques, de chocs mécaniques et de légères variations d'indice de réfraction de l'analyte, provoquées par une légère variation de la température, ou de la composition chimique de l'analyte appelée « effet de matrice » dans le domaine de l'analyse. Plus précisément l'effet de matrice correspond à l'influence de l'environnement chimique sur les atomes de l'analyte.

Ces perturbations condamnent ces techniques de mesure car elles possèdent des niveaux de reproductibilité faibles, à peine de 30% selon certains auteurs. Ces techniques sont bien souvent incompatibles avec les contraintes de l'analyse physico-chimique. Un autre inconvénient des dispositifs qui ont des pièces en mouvement comme ceux illustrés aux figures 2A, 2C, 2D est qu'ils ne sont souvent pas assez robustes.

Les dispositifs interférentiels ou de Shack-Hartmann sont voués à l'étude de la géométrie des lentilles thermiques.

Les configurations qui utilisent les interférences mettent en jeu des processus qui nécessitent la mise en oeuvre de deux voies de mesure. L'étalonnage du dispositif est compliqué du fait de l'observation locale de l'interférence spatiale et d'un front d'onde fortement altéré lors de la traversée de la lentille thermique.

Enfin l'analyseur de Shack-Hartmann est un dispositif de faible sensibilité et difficilement transposable à la mesure quantitative d'espèces chimiques.

JPH109811 A (JP4042068B B2) décrit une pluralité de lentilles thermiques et sphériques qui sont issues d'une élévation de température d'un corps en suspension, en l'occurrence des particules colloïdales telles que des particules de latex. Ces lentilles sont de véritables lentilles, c'est-à-dire des lentilles physiques, dont la focale résulte de la conjonction de la géométrie du colloïde, de l'indice de réfraction du colloïde chauffé par le faisceau laser, et de l'indice de réfraction du milieu dans lequel se trouve le colloïde. Dans ce document, même si des interférences sont observées, il n'y a pas de mesure de la distance focale d'une unique lentille thermique.

## EXPOSÉ DE L'INVENTION

La présente invention a justement comme but de proposer un procédé de mesure de la distance focale d'une lentille thermique qui est une lentille virtuelle créée dans un analyte qui ne présente pas les inconvénients mentionnés ci-dessus et en particulier qui n'est pas sensible aux variations énergétiques de la source générant le faisceau optique de sonde.

Un autre but de l'invention est de proposer un tel procédé qui n'est pas dépendant aux variations énergétiques transmises par la source générant le faisceau optique de sonde sous l'effet de son absorption par l'analyte.

Encore un autre but de l'invention est de proposer un tel procédé qui n'est pas dépendant de légères variations géométriques au niveau de l'intersection entre le faisceau optique de sonde et le faisceau optique d'excitation.

Un procédé de mesure de la distance focale d'une lentille thermique qui est une lentille virtuelle créée dans un analyte selon l'invention comporte les étapes de :

fourniture d'un faisceau optique d'excitation par une source optique d'excitation, ce faisceau optique d'excitation traversant l'analyte et y créant la lentille thermique, cette lentille thermique étant unique et de géométrie sensiblement cylindrique,

émission d'un faisceau optique de sonde cohérent par une source optique de sonde, ce faisceau optique de sonde traversant l'analyte et se propageant sensiblement perpendiculairement au faisceau optique d'excitation,

interception du faisceau optique de sonde par un détecteur après son passage dans l'analyte, caractérisé en ce qu'il comporte en outre les étapes de

focalisation du faisceau optique de sonde en amont ou en aval de la lentille thermique de telle sorte que la lentille thermique ne soit traversée que par une fraction seulement du faisceau optique de sonde,

acquisition d'une image interférentielle par le détecteur,

traitement de l'image interférentielle pour calculer la distance focale de la lentille thermique.

Avantageusement le faisceau optique d'excitation est un faisceau laser.

Le procédé peut comporter en outre une étape de focalisation du faisceau optique d'excitation avant qu'il ne traverse l'analyte par des moyens de focalisation, ce qui permet d'utiliser un analyte de petite taille.

Le détecteur peut être est une caméra CCD.

Il est préférable que le procédé comporte une étape de déclenchement du détecteur en synchronisme avec la source optique d'excitation pour se prémunir des parasites du champ électrique de l'impulsion du faisceau optique de sonde et des diffusions Rayleigh et Raman.

La source optique d'excitation peut être en impulsions ou continue.

On prévoit de préférence une étape de réglage de l'intensité du faisceau optique de sonde par des moyens de réglage situés en amont de l'analyte, les moyens de réglage pouvant être un filtre rotatif possédant une absorbance variable, croissante ou décroissante.

La présente invention concerne également un procédé d'analyse physico chimique d'un analyte, il comporte les étapes du procédé de mesure de la distance focale d'une lentille thermique ainsi caractérisé et une étape de détermination d'au moins une grandeur physico-chimique relative à l'analyte grâce à des moyens de détermination, cette grandeur dépendant de la distance focale mesurée.

La grandeur physico-chimique peut être la concentration de l'analyte, son absorbance, sa capacité calorifique, sa conductivité thermique, sa masse volumique, ou son coefficient d'absorption molaire. Un example non revendiqué concerne un dispositif de mesure de la distance focale d'une lentille thermique créée dans un analyte comportant une source optique d'excitation destinée à fournir un faisceau optique d'excitation traversant l'analyte et à y créer la lentille thermique, une source optique de sonde destinée à émettre un faisceau optique de sonde cohérent traversant l'analyte et se propageant sensiblement perpendiculairement au faisceau optique d'excitation, un détecteur destiné à intercepter le faisceau optique de sonde après son passage dans l'analyte. Le dispositif de mesure comporte, en outre, des moyens pour focaliser le faisceau optique de sonde en amont ou en aval de la lentille thermique de telle sorte que la lentille thermique ne soit traversée que par une fraction seulement du faisceau optique de sonde et qu'une image interférentielle soit acquise par le détecteur, des moyens de traitement de l'image interférentielle pour calculer la distance focale de la lentille thermique.

**BRÈVE DESCRIPTION DES DESSINS**

La présente invention sera mieux comprise à la lecture de la description d'exemples de réalisation donnés, à titre purement indicatif et nullement limitatif, en faisant référence aux dessins annexés sur lesquels :

les figures 1A, 1B, déjà décrites, montrent les deux types de lentille thermique créées dans un analyte ;

les figures 2A, 2B, 2C, 2D, déjà décrites, montrent des dispositifs de mesure de la distance focale d'une lentille thermique créée dans un analyte, de types connus, avec des pièces mobiles ;

les figures 3A, 3B, 3C, déjà décrites, montrent des dispositifs de mesure de la distance focale d'une lentille thermique créée dans un analyte, de types connus, fonctionnant avec des interférences ;

les figures 3D1, 3D2, déjà décrites, montrent un dispositif de mesure de la distance focale d'une lentille thermique créée dans un analyte de type Shack-Hartmann ;

la figure 4 montre un dispositif de mesure de la distance focale d'une lentille thermique créée dans un analyte ainsi qu'un dispositif d'analyse physico-chimique d'un analyte, ces dispositifs permettant de mettre en oeuvre les procédés selon l'invention ;

les figures 5A, 5C montrent respectivement les moyens de focalisation du faisceau optique de sonde du dispositif de mesure de la figure 4, dans une configuration dans laquelle la focalisation se fait d'une part en amont de la lentille thermique et d'autre part en aval de la lentille thermique, la figure 5B montre une configuration, exclue au niveau de la lentille thermique ;

les figures 6A, 6B, 6C montrent l'altération du front d'onde du faisceau optique de sonde intercepté par le détecteur dans les trois configurations des figures 5A, 5B, 5C ;

la figure 7 montre un interférogramme obtenu avec le dispositif de la figure 4 et un interférogramme théorique obtenu dans les mêmes conditions ;

la figure 8 montre la variation de la distance focale d'une lentille thermique créée dans une solution d'éthanol et de cobalt en fonction de la concentration de cobalt, cette distance focale étant mesurée par le dispositif de mesure en mettant en oeuvre le procédé de l'invention.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

## EXPOSÉ DÉTAILLÉ DE MODES DE RÉALISATION PARTICULIERS

On va maintenant se référer à la figure 4 qui montre schématiquement un dispositif de mesure de la distance focale d'une lentille thermique 26 créée dans un analyte 23. Il est entendu, dans cette invention, que l'analyte est un milieu monophasique dans lequel sont dissoutes une ou plusieurs espèces chimiques. L'analyte 23 peut être liquide, gazeux ou solide.

Ce dispositif de mesure permet de mettre en oeuvre le procédé selon l'invention.

Il comporte une source optique d'excitation 21 destinée à émettre un faisceau optique d'excitation 21.1 qui traverse l'analyte 23 et y créé la lentille thermique 26. Cette lentille thermique est une lentille virtuelle, unique et de géométrie sensiblement cylindrique comme on l'a évoqué tout à l'heure. La source optique d'excitation 21 est une source laser qui a une longueur d'onde ajustée avec la longueur d'onde d'absorption d'une espèce chimique de l'analyte, cette dernière contribuant à la création de la lentille thermique. Par exemple dans le cas d'un analyte formé d'une solution d'éthanol et de cobalt, la longueur d'onde de la source optique d'excitation sera d'environ 532 nm. La source optique d'excitation 21 pourra être continue ou en impulsions. On prévoit un obturateur mécanique 20 entre la source optique d'excitation 21 et l'analyte 23 si la source optique d'excitation 21 est continue.

Le dispositif de mesure comporte également une source optique de sonde 22 destiné à émettre un faisceau optique de sonde 22.1. Le faisceau optique de sonde 22.1 sert à détecter l'effet thermique créé par le faisceau optique d'excitation 21.1. Le faisceau optique de sonde 22.1 se propage en direction de l'analyte 23 et le traverse. La direction de propagation du faisceau optique de sonde 22.1 est sensiblement perpendiculaire à celle du faisceau optique d'excitation. Le faisceau optique de sonde 22.1 est un faisceau optique cohérent de préférence monochromatique. Il s'agit de préférence d'un faisceau optique continu, mais on pourrait envisager qu'il soit en impulsions. La source optique de sonde 22 peut être une source laser HeNe dont la longueur d'onde vaut environ 633 nm et dont l'énergie peut être ajustée, en conservant bien sûr la cohérence. Après être passé à travers l'analyte 23, le faisceau optique de sonde 22.1 est intercepté par un détecteur 24 destinée à mesurer l'intensité du front d'onde du faisceau optique de sonde (non visible sur la figure 4). Il peut s'agir d'une caméra de type CCD (pour charge coupled device ou dispositif à transfert de charges en français).

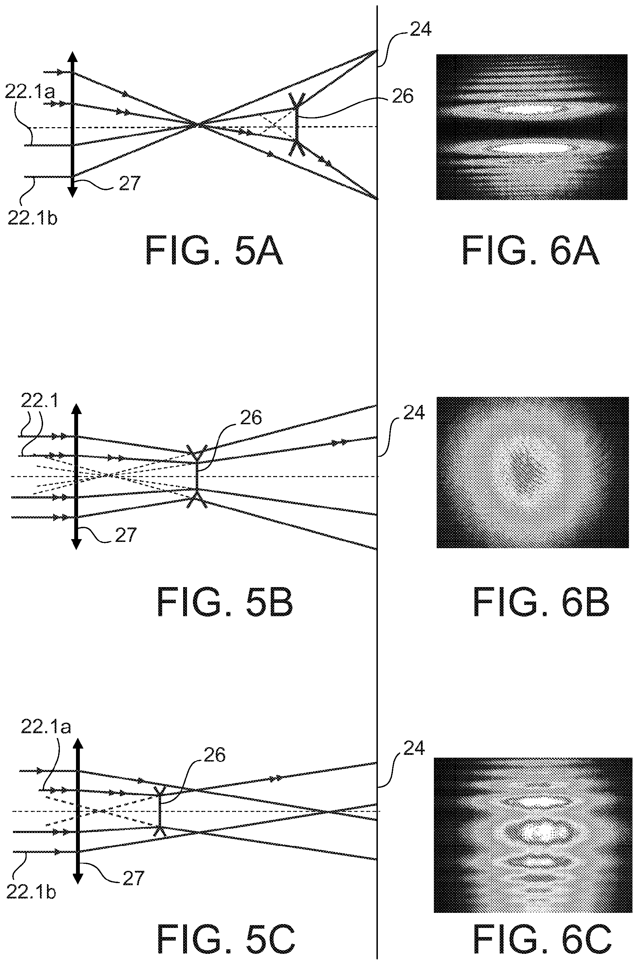

Le dispositif de mesure comporte en outre des moyens de focalisation 27 du faisceau optique de sonde 22.1, la focalisation se faisant en amont ou en aval de la lentille thermique 26 mais pas au niveau de la lentille thermique. De plus, La focalisation est telle que la lentille thermique 26 ne soit traversée que par une fraction du faisceau optique de sonde 22.1. Des détails seront donnés par la suite. Les moyens de focalisation 27 sont placés entre la source optique de sonde 22 et l'analyte 23. On pourra se référer aux figures 5A et 5C qui illustrent ce propos. On suppose que dans l'exemple décrit, les moyens de focalisation 27 du faisceau optique de sonde 22 ont une distance focale d'environ 100 mm. Il est bien entendu que ce n'est qu'un exemple non limitatif, et que cette valeur de distance focale peut être différente en fonction de la taille du détecteur 24 et de la sensibilité attendue.

Il est possible que le dispositif de mesure comporte de plus des moyens de focalisation 25 du faisceau optique d'excitation. Ils sont placés entre la source optique d'excitation 21 et l'analyte 23. Ils permettent d'employer un analyte 23 de petite taille. Dans l'exemple décrit la distance focale des moyens de focalisation du faisceau optique d'excitation 21.1 peut valoir environ 25,4 mm. Cette valeur de distance focale peut être différente en fonction de la sensibilité attendue du dispositif de mesure.

Le dispositif de mesure peut comporter, en outre, un filtre 28 destiné à ajuster l'intensité du faisceau optique de sonde 22. Le filtre 28 est placé entre la source optique de sonde 22 et les moyens de focalisation 27 du faisceau optique de sonde. Le filtre 28 peut être de type rotatif à absorbance croissante ou décroissante.

Le détecteur 24 délivre un signal qui est injecté dans des moyens de traitement 29 destinés à calculer la distance focale de la lentille thermique 26.

On suppose que sur la figure 4 le dispositif représenté est un dispositif d'analyse physico-chimique d'un analyte. Il comporte en plus du dispositif de mesure des moyens de détermination 29' d'au moins une grandeur physico-chimique relative à l'analyte 23, cette grandeur dépendant de la distance focale. Ces moyens de détermination 29' reçoivent la distance focale calculée par les moyens de traitement 29 et délivrent au moins une grandeur physico-chimique relative à l'analyte 23. Cette grandeur dépend bien sûr de la distance focale calculée. Il peut s'agir par exemple de la concentration de l'analyte, c'est-à-dire de la concentration en une espèce chimique contenue dans l'analyte, de son absorbance, de sa capacité calorifique, de sa conductivité thermique, de sa masse volumique, de son coefficient d'absorption molaire.

Les moyens de détermination 29' peuvent être confondus avec les moyens de traitement 29.

Il est préférable que le détecteur 24 soit déclenché en synchronisme avec la source optique d'excitation 21 de manière à se prémunir contre des parasites du champ électrique du faisceau laser et des diffusions Rayleigh et Raman de l'analyte 23.

La figure 5A illustre le cas où les moyens de focalisation 27 du faisceau optique de sonde 22.1 sont focalisés en amont de la lentille thermique 26. La figure 5C illustre le cas où les moyens de focalisation 27 du faisceau optique de sonde 22.1 sont focalisés en aval de la lentille thermique 26. Dans ces deux cas, seule une fraction 22.1a du faisceau optique de sonde 22.1 traverse la lentille thermique 26. La fraction complémentaire du faisceau optique de sonde 22 qui, elle ne traverse pas la lentille thermique 26, est référencée 22.1b. Ces deux fractions 22.1a, 22.1b du faisceau optique de sonde 22 vont former une image interférentielle sur le détecteur 24. Sur le détecteur 24, se combinent des ondes n'ayant pas parcouru le même chemin optique. Il en résulte donc une alternance d'ondes constructives et d'ondes destructives dont l'interfrange dépend de la distance focale de la lentille thermique 26.

Sur la figure 5B, le faisceau optique de sonde 22.1 est focalisé sur la lentille thermique 26. Tous les rayons de ce faisceau optique 22.1 passent à travers la lentille thermique 26 et il n'y a pas d'interférences au niveau du détecteur 24. La configuration de la figure 5B ne fait pas partie de l'invention.

Sur les figures 6A, 6B, 6C on a représenté une image délivrée par le détecteur 24 alors que les moyens de focalisation du faisceau optique de sonde correspondent à ceux des figures 5A, 5B, 5C respectivement. Les figures 6A, 6C sont des images interférentielles exploitables. Sur la figure 6B, il n'y a pas d'interférences et cette image n'est pas exploitable.

Si l'on veut réduire l'encombrement du dispositif de mesure, il est préférable de choisir la configuration de la figure 5C dans laquelle les focales et les ajustements spatiaux sont tels que la lentille thermique 26 située au-delà du point de focalisation du faisceau optique de sonde. Dans le même but on veillera à ce que la lentille thermique ait une section inférieure à celle du faisceau optique de sonde.

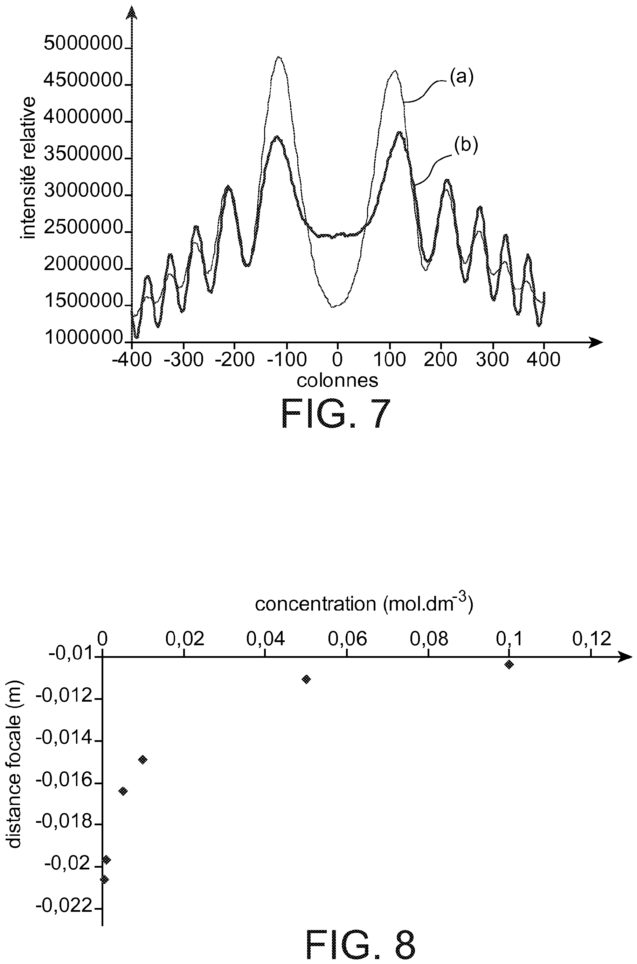

La figure 7 illustre avec la référence (a) un interférogramme obtenu à partir de l'image interférentielle acquise par le détecteur illustrée à la figure 6A. Pour cela les moyens de traitement ont additionné, ligne par ligne, les intensités acquises par chacun de pixels de la ligne. L'interférogramme portant la référence (b) est un interférogramme théorique correspondant aux mêmes conditions.

On applique les hypothèses simplificatrices qui suivent. Les conditions de Gauss sont respectées. La lentille thermique créée est de géométrie sensiblement cylindrique. Les effets de la lentille thermique sont prédominants dans le déphasage des ondes qui atteignent le détecteur. On néglige l'épaisseur de la lentille thermique.

Sur cet interférogramme, l'intensité I(x) à la côte x peut s'exprimer selon la formule usuelle de l'interféromètre de Michelson à division d'amplitude :

$$I(x) = 2I_x(1 + \cos(\Delta\varphi_x)) \qquad (6)$$

avec

$$\Delta\varphi_x = \frac{2.\pi.\partial_x}{\lambda} \qquad (6')$$

$I_x$ étant l'intensité du faisceau optique de sonde à la côte x en l'absence de lentille thermique,
$\lambda$ la longueur d'onde du faisceau optique de sonde, $\delta_x$ la différence de marche entre les deux fractions du faisceau optique de sonde.

Posons :

D distance entre la lentille thermique et le détecteur
L distance entre les moyens de focalisation du faisceau optique de sonde et la lentille thermique
$f'_{LT}$ distance focale de la lentille thermique
$f'_{LF}$ distance focale des moyens de focalisation du faisceau optique de sonde

Alors

$$\delta_x = \frac{D.x^2}{2} \cdot \left[ \frac{1}{(D - f'_{LF} + L)^2} - \frac{1}{\left( \left| \frac{f'_{LT}(f'_{LF} - L)}{f'_{LF} - L + f'_{LT}} \right| + D \right)^2} \right] \qquad (7)$$

En introduisant la différence de marche induite par les moyens de focalisation du faisceau optique de sonde pour satisfaire les conditions aux limites, l'expression finale de l'intensité I(x) à la côte x devient :

$$I(x) = I_x + \frac{I_x}{2} \cdot \cos(\varphi_{cste} - \Delta\varphi_x) \qquad (8)$$

avec

$$\varphi_{cste} = D.x^2 \cdot \left[ \frac{1}{(D - f'_{LF} + L)^2} - \frac{1}{D^2} \right] \qquad (9)$$

On suppose que dans le dispositif de mesure employé dans cette série de mesures et mettant en oeuvre le procédé de mesure selon l'invention :

D= 132 mm
L= 128 mm
f'$_{LF}$= 100 mm, la distance focale f'$_{LT}$ de la lentille thermique est optimisée par la méthode des moindres carrés pour ajuster la fonction théorique à l'interférogramme expérimental montré à la figure 7. Il est bien sûr que ces valeurs peuvent varier selon les analytes. Pour un analyte qui est une solution d'éthanol contenant du cobalt et pour lequel la concentration en cobalt est de 0,1 mol/L, la distance focale théorique f'$_{LT}$ de la lentille thermique est de -10,4 mm.

La distance focale f'$_{LT}$ calculée par les moyens de traitement est de -10,4 mm.

On va maintenant s'intéresser à la figure 8 qui montre une courbe d'étalonnage exprimant la distance focale d'une lentille thermique produite dans un analyte qui est une solution d'éthanol et de cobalt en fonction de la concentration en cobalt.

La solution d'éthanol et de cobalt a les caractéristiques suivantes :

Coefficient d'absorption molaire :
$\varepsilon$ = 20 dm$^3$.mol$^{-1}$cm$^{-1}$.
Conductivité thermique :
k = 0,0018 W.cm$^{-1}$.K$^{-1}$
Masse volumique : $\rho$ = 0,789 g.cm$^{-3}$
Capacité calorifique : C$_p$ = 2,44 J.g$^{-1}$.K$^{-1}$
Gradient d'indice de réfraction :
dn/dT = 397.10$^{-6}$ K$^{-1}$.

Elle a été étudiée par TLS (pour thermal lens spectroscopy soit spectroscopie de lentille thermique) sur une gamme de concentration s'étendant de 5.10$^{-4}$ A 0,1 mol/L.

Le faisceau optique d'excitation est en impulsions et sa longueur d'onde est égale à 532 nm. La longueur d'onde du faisceau optique de sonde à 633 nm. Le faisceau optique de sonde est continu.

L'analyte est introduit dans une cuve de quartz de 1 mm de parcours optique, sans agitation. D'autres contenants de dimensions différentes sont bien sûr possibles.

Pour chaque concentration, un interférogramme est mesuré par le dispositif de mesure, lors de la mise en oeuvre du procédé de mesure selon l'invention et la distance focale déduite en utilisant l'équation [8].

L'allure de la courbe de la figure 8 correspond à celle prévue par l'équation [8] à un facteur près introduit par le fait que l'analyte n'est pas renouvelé après chaque impulsion du faisceau optique d'excitation.

La sensibilité de la mesure est équivalente à celle obtenue par spectrophotométrie d'absorption moléculaire alors que les volumes sondés peuvent être inférieurs de plusieurs ordres de grandeur. Les performances habituelles de la spectrométrie de lentille thermique ne sont pas altérées.

Un avantage du procédé de mesure selon l'invention est que l'image interférentielle acquise par le détecteur est indépendante de l'intensité du faisceau optique de sonde ou de son éventuelle absorption par l'analyte. Le filtre peut absorber une partie du faisceau optique de sonde, mais son rôle est d'optimiser l'intensité arrivant sur le détecteur pour qu'il ne sature pas.

Un autre intérêt de ce dispositif de mesure et du procédé correspondant est que le signal délivré par le détecteur est peu dépendant des conditions mécaniques d'ajustement des différents composants optiques entre eux.

Le procédé de mesure objet de l'invention permet d'améliorer sensiblement les techniques d'analyse utilisant une lentille thermique.

Les points d'amélioration sont les suivants.

La mesure est indépendante vis-à-vis de l'intensité du front d'onde reçu par le détecteur. Cette amélioration se concrétise par le fait qu'il n'est pas nécessaire de contrôler en énergie la source optique de sonde, que la source optique de sonde n'a pas besoin d'être stabilisée en énergie, que l'analyte peut être absorbant à la longueur d'onde du faisceau optique de sonde.

La stabilité de réglage est bien meilleure que dans l'art antérieur, cela est lié à des ajustements mécaniques moins contraints des composants du dispositif de mesure.

L'interférogramme induit par la lentille thermique peut être exploité dans une démarche analytique.

**DOCUMENTS CITES**

[1] « New thermooptical measurement method and a comparison with other methods », Chenming hu et J.R Whinnery, Applied optics, vol 12, No 1, pages 72-79 (1973) ;

[2] « Beam geometry optimization in dual-beam thermal lensing spectrometry », T. Berthoud, N. Delorme et P. Mauchien Anal. Chemistry, vol 57, No 7, pages 1216-1219 (1985) ;

[3] « Method for temporally and spatially resoved thermal-lensing measurements », R. Paugstadt et M. Bass, Applied optics, vol 33, No 6, pages 954-959 (1994) ;

[4] « Applications of photothermal beam deflection calorimetry to organic photochemistry», Syun-Ru et Daniel E. Falvey, Journal of photochemistry and photobiology, A: chemistry, No 87, pages 13-21 (1995);

[5] «Theoretical and experimental studies of pump-induced probe deflection in a thermal médium», Raj M. Misra et Partha P. Banerjee, Applied optics, vol 34, No 18, pages 3358-3366 (1995);

[6] «Fourier transforms method for measuring thermal lens induced in diluted liquid samples», L. Rodriguez et R. Escalonia, Optics communications, No 227, pages 57-62 (2007);

[7] « Three waves latéral shearing interferometer», J. Primot, Applied optics, vol 32, No 31, pages 6242-6249 (1993) ;

[8] « Achromatic three waves (or more) lateral shearing interferometer », J. Primot et L. Sogno, Optical society of America, vol 12, No 12, pages 2679-2685 (1995) ;

[9] « Aspherical wavefront measurements: Shack-Hartmann numerical and practical experiments », G. Artzner, Pure Applied Opt. 7, pages 435-448 (1998);

[10] « Refraction mapping of translucent objects with Shack-Hartmann sensor » V. V. Molebny, R. Gordon, V. N. Kurashov, D. V. Podanchuk, V. Kovalenko et J. Wu, Proc. SPIE, No 3548, pages 31-33 (1998).

**Revendications**

1. Procédé de mesure de la distance focale d'une lentille thermique (26) qui est une lentille virtuelle créée dans un analyte (23) comportant les étapes de

fourniture d'un faisceau optique d'excitation (21.1) par une source optique d'excitation (21), ce faisceau optique d'excitation traversant l'analyte (23) et y créant la lentille thermique (26), cette lentille thermique étant unique et de géométrie sensiblement cylindrique,

émission d'un faisceau optique de sonde cohérent (22.1) par une source optique de sonde (22) ce faisceau optique de sonde traversant l'analyte (23) et se propageant sensiblement perpendiculairement au faisceau optique d'excitation (21.1),

interception du faisceau optique de sonde par un détecteur (24) après son passage dans l'analyte (23), **caractérisé en ce qu'**il comporte en outre les étapes de

focalisation du faisceau optique de sonde (22.1) en amont ou en aval de la lentille thermique (26) de telle sorte que la lentille thermique (26) ne soit traversée que par une fraction (22.1a) seulement du faisceau optique de sonde (22.1),

acquisition d'une image interférentielle par le détecteur (24),

traitement de l'image interférentielle pour calculer la distance focale de la lentille thermique (26) .

2. Procédé de mesure selon la revendication 1, dans lequel le faisceau optique d'excitation (21.1) est un faisceau laser.

3. Procédé de mesure selon l'une des revendications 1 ou 2, comportant en outre une étape de focalisation du faisceau optique d'excitation avant qu'il ne traverse l'analyte (23) par des moyens de focalisation.

4. Procédé de mesure selon l'une des revendications précédentes, dans lequel le détecteur (24) est une caméra CCD.

5. Procédé de mesure selon l'une des revendications précédentes, comportant une étape de déclenchement du détecteur en synchronisme avec la source optique d'excitation (21)

6. Procédé de mesure selon l'une des revendications précédentes, dans lequel la source optique d'excitation (21) est en impulsions ou continue.

7. Procédé de mesure selon l'une des revendications précédentes, comportant en outre une étape de réglage de l'intensité du faisceau optique de sonde (22.1) par des moyens de réglage (28) situés en amont de l'analyte (23).

8. Procédé de mesure selon la revendication 7, dans lequel les moyens de réglage (28) sont un filtre rotatif possédant une absorbance variable, croissante ou décroissante.

9. Procédé d'analyse physico chimique d'un analyte (23) **caractérisé en ce qu'**il comporte les étapes du procédé de mesure de la distance focale d'une lentille thermique (26) selon l'une des revendications précédentes et une étape de détermination d'au moins une grandeur physico-chimique relative à l'analyte (23) grâce à des moyens de détermination (29'), cette grandeur dépendant de la distance focale mesurée.

10. Procédé d'analyse selon la revendication 9, dans lequel la grandeur physico-chimique est la concentration de l'analyte (23), son absorbance, sa capacité calorifique, sa conductivité thermique, sa masse volumique, ou son coefficient d'absorption molaire.


**Patentansprüche**

1. Verfahren zum Messen der Brennweite einer thermischen Linse (26), bei der es sich um eine virtuelle Linse handelt, die in einem Analyten (23) erzeugt wird, umfassend die Schritte:

Bereitstellen eines optischen Anregungsstrahls (21.1) durch eine optische Anregungsquelle (21), wobei dieser optische Anregungsstrahl den Analyten (23) durchquert und darin die thermische Linse (26) erzeugt, wobei diese thermische Linse einzeln und mit im Wesentlichen zylindrischer Geometrie vorgesehen ist,

Emittieren eines kohärenten optischen Sondenstrahls (22.1) durch eine optische Sondenquelle (22), wobei der optische Sondenstrahl den Analyten (23) durchquert und sich im Wesentlichen senkrecht zum optischen Anregungsstrahl (21.1) ausbreitet,

Abfangen des optischen Sondenstrahls durch einen Detektor (24) nach seinem Eintreten in den Analyten (23), **dadurch gekennzeichnet, dass** es ferner die Schritte umfasst:

Fokussieren des optischen Sondenstrahls (22.1) vor oder hinter der thermischen Linse (26), so dass die thermische Linse (26) nur von einem Bruchteil (22.1a) des optischen Sondenstrahls (22.1) durchquert wird,

Erfassen eines Interferenzbildes durch den Detektor (24),
Verarbeiten des Interferenzbildes zum Berechnen der Brennweite der thermischen Linse (26).

2. Messverfahren nach Anspruch 1, wobei es bei dem optischen Anregungsstrahl (21.1) um einen Laserstrahl handelt.

3. Messverfahren nach Anspruch 1 oder 2, ferner umfassend einen Schritt des Fokussierens des optischen Anregungsstrahls über Fokussierungsmittel, bevor er den Analyten (23) durchquert.

4. Messverfahren nach einem der vorangehenden Ansprüche, wobei es sich bei Detektor (24) um eine CCD-Kamera handelt.

5. Messverfahren nach einem der vorangehenden Ansprüche, umfassend einen Schritt des Triggerns des Detektors synchron mit der optischen Anregungsquelle (21).

6. Messverfahren nach einem der vorangehenden Ansprüche, wobei die optische Anregungsquelle (21) impulsweise oder kontinuierlich betrieben wird.

7. Messverfahren nach einem der vorangehenden Ansprüche, ferner umfassend einen Schritt des Einstellens der Intensität des optischen Sondenstrahls (22.1) durch Einstellmittel (28), die dem Analyten (23) vorgelagert sind.

8. Messverfahren nach Anspruch 7, wobei es sich bei den Einstellmitteln (28) um ein drehbares Filter handelt, das eine veränderliche, zunehmende bzw. abnehmende Absorption aufweist.

9. Verfahren zur physikalisch-chemischen Analyse eines Analyten (23), **dadurch gekennzeichnet, dass** es die Verfahrensschritte des Messens der Brennweite einer thermischen Linse (26) nach einem der vorangehenden Ansprüche und einen Schritt des Ermittelns zumindest einer auf den Analyten (23) bezogenen physikalisch-chemischen Größe durch Ermittlungseinrichtungen (29') umfasst, wobei diese Größe von der gemessenen Brennweite abhängt.

10. Analyseverfahren nach Anspruch 9, wobei die physikalisch-chemische Größe die Konzentration des Analyten (23), seine Absorption, seine Wärmekapazität, seine Wärmeleitfähigkeit, seine Dichte oder sein molarer Absorptionskoeffizienten ist.

**Claims**

1. A method for measuring the focal distance of a thermal lens (26) which is a virtual lens created in an analyte (23) including the steps of
providing an exciting optical beam (21.1) by an exciting optical source (21), such exciting optical beam passing through the analyte (23) and creating the thermal lens (26), such thermal lens being unique and of substantially cylindrical geometry,
emitting a coherent probe optical beam (22.1) by a probe optical source (22), such probe optical beam passing through the analyte (23) and being propagated substantially perpendicular to the exciting optical beam (21.1),
intercepting the probe optical beam by a detector (24) after passing through the analyte (23), **characterised in that** it further includes the steps of
focusing the probe optical beam (22.1) upstream or downstream of the thermal lens (26) such that only a fraction (22.1a) of the probe optical beam (22.1) passes through the thermal lens (26),
acquiring an interference image by the detector (24),
processing the interference image to calculate the focal distance of the thermal lens (26).

2. The measuring method according to claim 1, wherein the exciting optical beam (21.1) is a laser beam.

3. The measuring method according to one of claims 1 or 2, further including a step of focusing the exciting optical beam before passing through the analyte (23) by focusing means.

4. The measuring method according to one of the preceding claims, wherein the detector (24) is a CCD camera.

5. The measuring method according to one of the preceding claims, including a step of triggering the detector in synchronism with the exciting optical source (21).

6. The measuring method according to one of the preceding claims, wherein the exciting optical source (21) is pulsed or continuous.

7. The measuring method according to one of the preceding claims, further including a step for setting the intensity of the probe optical beam (22.1) by setting means (28) located upstream of the analyte (23) .

8. The measuring method according to claim 7, wherein the setting means (28) are a rotary filter having a varying, increasing or decreasing absorbance.

9. A method for physico-chemically analysing an analyte (23) **characterised in that** it includes the step of the method for measuring the focal distance of a thermal lens according to one of the preceding claims and a step for determining at least one physico-chemical magnitude relating to the analyte (23) through determining means (29'), this magnitude depending on the measured focal distance.

10. Analysing method according to claim 9, wherein the physico-chemical magnitude is the analyte (23) concentration, absorbance, heat capacity, thermal conductivity, density or molar absorption coefficient.

FIG. 1A

FIG. 1B

FIG. 2A

FIG. 2B

FIG. 2C

FIG. 2D

FIG. 3A

FIG. 3B

FIG. 3C

FIG. 3D1

FIG. 3D2

FIG. 4

FIG. 5A

FIG. 6A

FIG. 5B

FIG. 6B

FIG. 5C

FIG. 6C

**FIG. 7**

**FIG. 8**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP H109811 A

- JP 4042068B B

**Littérature non-brevet citée dans la description**

- **CHENMING HU ; J.R WHINNERY.** New thermooptical measurement method and a comparison with other methods. *Applied optics,* 1973, vol. 12 (1), 72-79
- **T. BERTHOUD, N. DELORME ; P. MAUCHIEN.** Beam geometry optimization in dual-beam thermal lensing spectrometry. *Anal. Chemistry,* 1985, vol. 57 (7), 1216-1219
- **R. PAUGSTADT ; M. BASS.** Method for temporally and spatially resoved thermal-lensing measurements. *Applied optics,* 1994, vol. 33 (6), 954-959
- **SYUN-RU ; DANIEL E. FALVEY.** Applications of photothermal beam deflection calorimetry to organic photochemistry. *Journal of photochemistry and photobiology, A: chemistry,* 1995, vol. 87, 13-21
- **RAJ M. MISRA ; PARTHA P. BANERJEE.** Theoretical and experimental studies of pump-induced probe deflection in a thermal médium. *Applied optics,* 1995, vol. 34 (18), 3358-3366

- **L. RODRIGUEZ ; R. ESCALONIA.** Fourier transforms method for measuring thermal lens induced in diluted liquid samples. *Optics communications,* 2007, vol. 227, 57-62
- **J. PRIMOT.** Three waves latéral shearing interferometer. *Applied optics,* 1993, vol. 32 (31), 6242-6249
- **J. PRIMOT ; L. SOGNO.** Achromatic three waves (or more) lateral shearing interferometer. *Optical society of America,* 1995, vol. 12 (12), 2679-2685
- **G. ARTZNER.** Aspherical wavefront measurements: Shack-Hartmann numerical and practical experiments. *Pure Applied Opt.,* 1998, vol. 7, 435-448
- **V. V. MOLEBNY ; R. GORDON ; V. N. KURASHOV ; D. V. PODANCHUK ; V. KOVALENKO ; J. WU.** Refraction mapping of translucent objects with Shack-Hartmann sensor. *Proc. SPIE,* 1998, vol. 3548, 31-33